# EUROPEAN PATENT SPECIFICATION

(11) **EP 3 662 796 B1**
(45) Date of publication and mention of the grant of the patent: **09.08.2023**
(21) Application number: 19213919.4
(22) Date of filing: 05.12.2019
(51) Int. Cl.: A47J 37/12, G01K 1/08, G01K 13/02, A47J 31/52

(54) **DEVICE FOR SCRAPING A RESISTIVE THERMAL DEVICE WITHIN A HOLDING TUBE**
VORRICHTUNG ZUM ABSCHABEN EINER THERMISCHEN WIDERSTANDSVORRICHTUNG IN EINEM HALTEROHR
DISPOSITIF DE RACLAGE D'UN DISPOSITIF THERMIQUE RÉSISTIF À L'INTÉRIEUR D'UN TUBE DE SUPPORT

(30) Priority: 06.12.2018 US 201816211725
(43) Date of publication of application: 10.06.2020
(73) Proprietor: Tetra Laval Holdings & Finance S.A., 1009 Pully (CH)
(72) Inventor: Griffin, Bill, Trevor, WI 53179 (US)
(74) Representative: Tetra Pak - Patent Attorneys SE

(56) References cited:
- DE-A1-102016 115 426
- DE-T5-112014 002 928
- JP-A- 2012 047 662
- US-A- 1 981 721
- US-A1- 2009 309 619
- US-B2- 6 960 018

## Description

### Technical Field

The invention relates to a device and system for measuring a temperature of a liquid food product as well as a method of heat treating a liquid food product, where a temperature probe is used to measure a temperature of the liquid food product.

### Technical Background

During the processing of liquid food products, the liquid food product is heated and passed through a holding tube for a predetermined amount of time to remove pathogenic microorganisms. A temperature probe, such as a resistive thermal device (RTD) temperature probe, is typically arranged after the holding tube for measuring a temperature of the liquid food product to ensure that a predetermined minimum temperature has been held while the liquid food product passed the holding tube. Due to the high heat conditions within the holding tube, the liquid food product may burn and layers of the burned product may accumulate on the temperature probe, which is also referred to as fouling. Certain liquid food products may have characteristics that result in the product being more prone to burning. As the thickness of the burned product increases, the temperature probe becomes more insulated and consequently senses less heat such that the system is triggered to increase the amount of heat being added to the product prior to reaching the hold tube. Increasing the heat may disadvantageously result in excessive cooked flavor and color change of the liquid food product.

Conventional liquid food product systems have a predetermined heat limit such that when the heat is increased to the limit, the system will be maintained in a sterile mode while an aseptic intermediate cleaning (AIC) is initiated to clean the temperature probe. During the cleaning, a percentage of the burned product is removed. However, using a conventional AIC may result in undesirable operation times for processing the liquid food product due to the time used for cleaning the temperature probe. Additionally, due to the aseptic nature of liquid food product processing, certain cleaning products, such as those containing bacteria, are not suitable for cleaning the temperature probe.

US2009309619A1 discloses a system for measuring the state of degradation of cooking oil or fat includes at least one fryer pot; a conduit fluidly connected to the fryer pot for transporting cooking oil from the fryer pot and returning the cooking oil back to the fryer pot. A means for re-circulating cooking oil to and from the fryer pot; and a sensor disposed in fluid communication with the conduit that measures an electrical property of the cooking oil as the cooking oil flows past the sensor and is returned to the at least one fryer pot is provided. A temperature sensor is also included proximate said sensor.

US6960018B2 discloses a device and method for removing build-up on measurement gauges. The device and method involve a movable scraper that fits around a cylindrical shield of a measurement gauge and continuously removes the build-up on the shield. Movement of the scraper is accomplished by a magnetic coupling between a magnetic core attached to the scraper, which is inside a pipe or other piece of equipment, and solenoids that are installed on the outside of the pipe. The device and method ensure instantaneously correct readings from the measurement gauge and improve control and operation strategies of heat exchanges, with significant economic advantages.

### Summary of the Invention

It is an object of the invention to at least partly overcome one or more limitations of the prior art. In particular, it is an object to provide a temperature probe that can operate accurately for long periods of time, even if the probe is subjected to liquid food products at high temperatures, which usually cause fouling of the temperature probe.

The invention is directed to a device for measuring a temperature of a liquid food product comprising a scraping sleeve as defined by independent claim 1.

The scraping sleeve described herein is advantageous in that the scraping sleeve is used to clean the temperature probe by physically scraping the surface of the temperature probe which enables the temperature probe to sense an accurate temperature of the liquid food product. Using the scraping sleeve to physically scrape the temperature probe is further advantageous in that the aseptic condition for the liquid food product within the housing is maintained. Since the built-up layers of the burned product on the temperature probe is reduced, the frequency and intervals of the AIC will also be reduced. Accordingly, the operation times for processing the liquid food product will be improved.

The device may include an inner diameter of the scraping sleeve and the outer surface of the temperature probe defining a radial clearance therebetween to allow the scraping sleeve to scrape the deposits from the temperature probe without contacting the outer surface of the temperature probe.

The clearance may be at least 0.90 millimeters.

The scraping sleeve may have an inner scraping diameter that is larger than an outer diameter of the temperature probe by at least 10%.

The scraping sleeve may surround an entire diameter of the outer surface of the temperature probe.

The longitudinal body of the scraping sleeve may have at least one rib that defines an inner scraping diameter of the scraping sleeve.

The at least one rib may define a radial surface for moving the deposits that has been scraped off from the temperature probe in an axial direction along the temperature probe.

The scraping sleeve may have a plurality of radial slots and a plurality of ribs that define inner, radial surfaces of the scraping sleeve.

The plurality of radial slots may form over 50% of an outer surface area of the scraping sleeve.

The scraping sleeve may be arranged at an axial end of the temperature probe.

The device includes an actuator to which an axial end of the scraping sleeve is attached, such that the actuator can move the scraping sleeve along the temperature probe.

A heat-treatment system arranged to increase a temperature of a liquid food product to thereby reduce the number of microorganisms in the liquid food product may include the device for measuring the temperature of the liquid food product.

According to another aspect of the invention, a method of heat treating a liquid food product includes heating the liquid food product to a predetermined temperature of at least 135°C as defined by independent claim 12 is provided.

Although various aspects of the invention are set out in the accompanying independent claims, other aspects of the invention may include any combination of features from the described embodiments and/or the accompanying dependent claims with the features of the independent claims, and not only the combinations explicitly set out in the accompanying claims.

### Brief Description of the Drawings

Embodiments of the invention will now be described, by way of example, with reference to the accompanying schematic drawings, where:
Fig. 1 is a perspective view of a housing including a scraping sleeve and a device for measuring a temperature of a liquid food product.
Fig. 2 is a front view of the housing shown in Fig. 1.
Fig. 3 is a sectional view of the housing shown in Fig. 1, when connected to an actuator.
Fig. 4 is a front view of the scraping sleeve and temperature measuring device shown in Fig. 3.
Fig. 5 is a schematic diagram showing a heat treatment system including the housing shown in Fig. 1.
Fig. 6 is a flow chart of a method of heat treating a liquid food product.

### Detailed Description

The method and system according to the present invention has particular application in a heat treatment system for processing liquid food products, such as milk. The method and system use a scraping sleeve that is concentrically arranged over a temperature probe, such as a resistive thermal device (RTD) type, in a housing to scrape and remove deposits from the temperature probe that have been formed by accumulation of the liquid food product on an outer surface of the temperature probe. The scraping sleeve is arranged to have a radial clearance with the temperature probe such that the scraping sleeve scrapes the deposits without contacting and scratching the outer surface of the temperature probe. Additionally, the scraping sleeve has radial slots that enable the scraped deposits to be removed from the temperature probe through the radial slots. Using the scraping sleeve is advantageous in that an aseptic condition for the liquid food product within the housing is maintained while also enabling the temperature probe to detect an accurate temperature of the liquid food product.

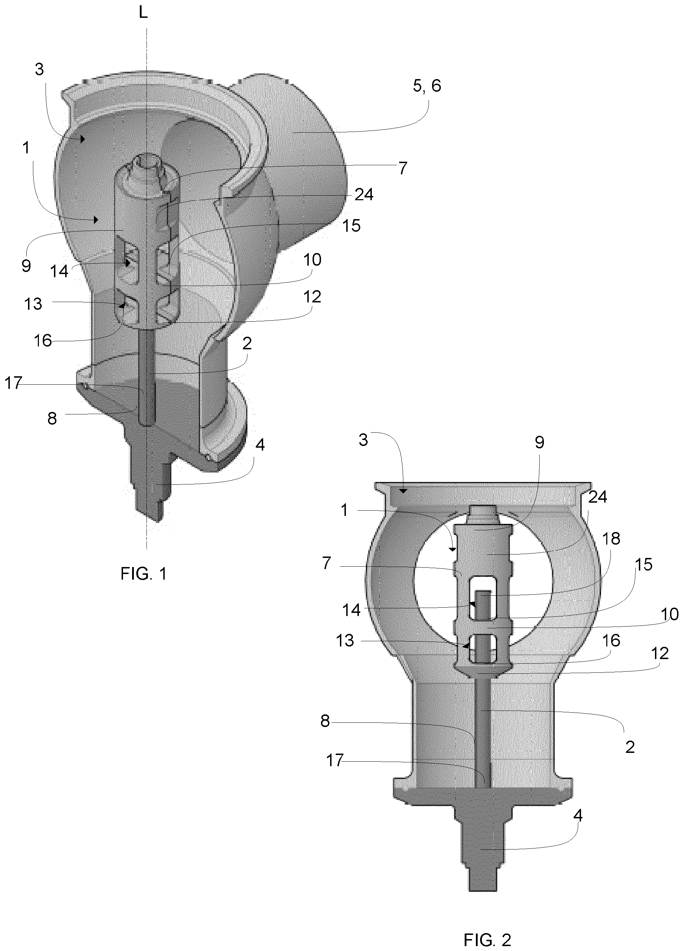

Referring first to Figs. 1-4, a device 1 for measuring a temperature of a liquid food product is shown. The device 1 includes a temperature probe 2, which may be an RTD temperature probe that is arranged along a longitudinal axis L within a housing 3. More than one temperature probe may be arranged within the housing 3. For example, a temperature probe may be arranged at an inlet of the housing 3 and another temperature probe may be arranged at an outlet of the housing 3. The housing 3 is arranged along a liquid food product processing line and more particularly, typically after a holding tube, as part of a heat-treatment system that increases the temperature of the liquid food product to reduce the number of microorganisms in the liquid food product. The housing 3 may also be referred to as a tube or chamber that may be arranged as a pipe section along the processing line. The temperature probe 2 is rod-like in shape and may be mounted to a cover plate or a base 4 that encloses a bottom portion of the housing 3. The temperature probe 2 may be formed integrally with the base 4 or secured to the base 4 such as with a clamp. The main chamber or volume of the housing 3 in which the temperature probe 2 is arranged may be spherical in shape. Other shapes may be suitable.

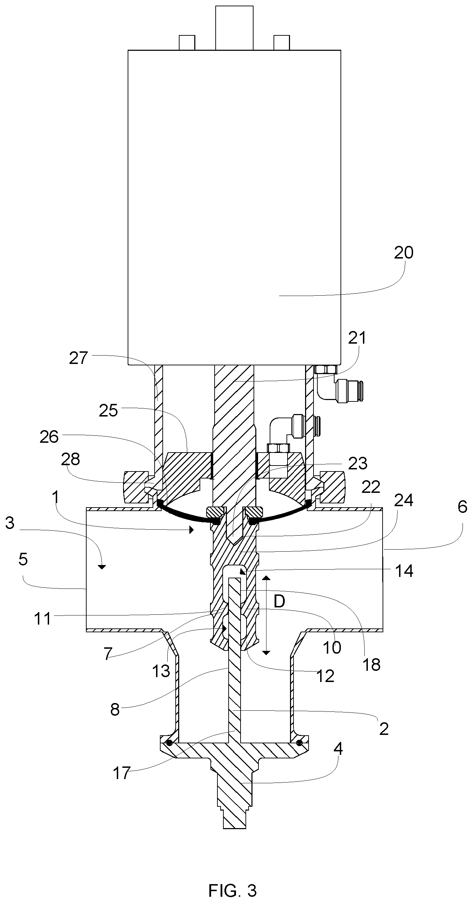

The housing 3 may be covered by a stainless steel material to prevent handlers from being burnt when touching the housing 3 and due to the radiation of the housing 3. As best shown in Fig. 3, an inlet port 5 and an outlet port 6 are formed on sides of the housing 3 to enable the liquid food product to enter the housing 3 from an upstream location along the processing line and exit the housing 3 to a downstream location along the processing line. The inlet port 5 and the outlet port 6 may be aligned with each other on opposite sides of the main volume of the housing 3 and arranged such that fluid flows perpendicular to the longitudinal axis L. The temperature probe 2 may be arranged to extend upwardly into the fluid flow such that the temperature probe 2 is arranged normal to the fluid flow. Accordingly, the fluid will pass over the temperature probe 2 or the plurality of temperature probes for temperature measurement. The temperature probe 2 may be arranged at a predetermined height within the housing 3. The temperature probe 2 may be arranged to extend perpendicularly downwardly into the fluid flow.

A scraping sleeve 7 is concentrically arranged over the temperature probe 2 within the housing 3. The scraping sleeve 7 is axially moveable along the temperature probe 2 to scrape and remove deposits from the temperature probe 2 that have been formed by accumulation of the liquid food product on an outer surface 8 of the temperature probe 2 due to a high heat condition within the housing 3. For example, the liquid food product may be heated to a predetermined temperature of at least 135 degrees Celsius before entering the housing 3. The deposits may be formed of denatured proteins, sugars, and other liquid food product ingredients that may adhere to the temperature probe 2. More than one scraping sleeve 7 may be provided and a scraping sleeve may be provided for each temperature probe 2. The temperature probe may be arranged at the inlet of the housing 3 as a reference probe to be sensed in comparison with the other temperature probes being scraped by a scraping sleeve.

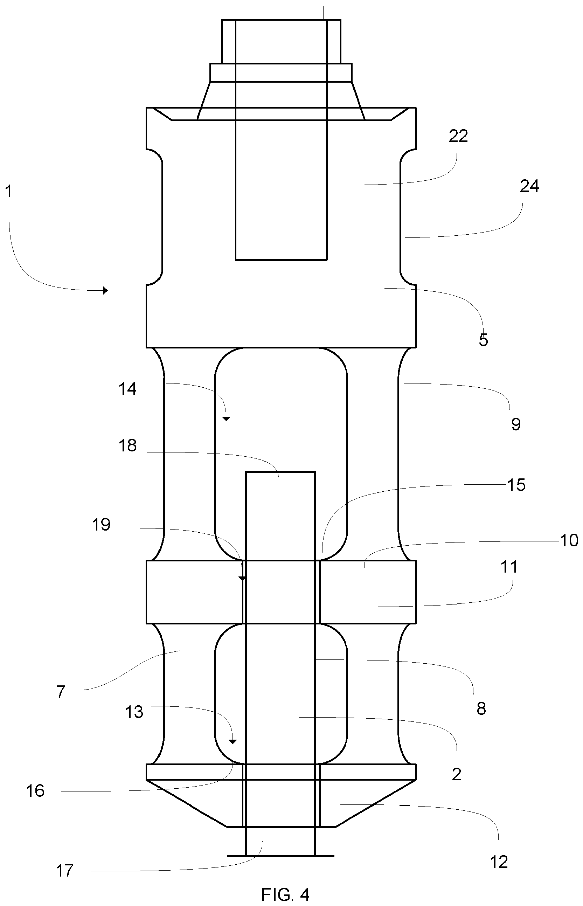

The scraping sleeve 7 may be cage-like in shape such that the scraping sleeve 7 has surface portions that are open to prevent the scraped deposits from being trapped within the scraping sleeve 7. A cylindrical shape may be suitable for the scraping sleeve 7 and enables the scraping sleeve 7 to surround an entire diameter of the outer surface 8 of the temperature probe 2. Other shapes for the scraping sleeve 7 may also be suitable. A longitudinal body 9 of the scraping sleeve 7 extends along the longitudinal axis L and has at least one rib 10 that defines an inner scraping diameter 11 of the scraping sleeve 7, as best shown in Fig. 4. The longitudinal body 9 is arranged to extend along an end of the temperature probe 2 and is formed separately from the temperature probe 2 enabling the scraping sleeve 7 to be removable from the housing 3 relative to the temperature probe 2, such as for maintenance or replacement of the scraping sleeve 7.

The outer diameter of the longitudinal body 9 of the scraping sleeve 7 may be at least twice as large as at least one of the outer diameter of the temperature probe 2 and the inner scraping diameter 11 of the scraping sleeve 7. The temperature probe 2 may have a diameter that is between 6.30 millimeters and 6.40 millimeters and an outermost diameter of the scraping sleeve may be between 25 and 26 millimeters. The inner scraping diameter 11 of the scraping sleeve 7 may be between 7.30 millimeters and 7.40 millimeters. The temperature probe may have a diameter of 6.35 millimeters, the inner scraping diameter 11 may be 7.35 millimeters, and the outermost diameter of the scraping sleeve 7 may be 25.80 millimeters. The dimensions described herein are merely exemplary and may be sized up or down depending on a particular application.

The longitudinal body 9 may include more than one rib 10 and as shown in Figs. 1 and 2, the longitudinal body 9 may include two ribs 10, 12. The ribs 10, 12 are axially spaced along the longitudinal body 9 and are connected by longitudinally extending surfaces of the longitudinal body 9. The ribs 10, 12 may be formed of radial portions that extend radially between the longitudinally extending surfaces of the longitudinal body 9 or the ribs 10, 12 may be formed as cylindrical rings between which the longitudinally extending surfaces extend. The longitudinally extending surfaces may define the length of the longitudinal body 9. An entire length of the longitudinal body 9 may be between 76 and 79 millimeters.

The ribs 10, 12 and the longitudinal body 9 define at least one radial slot 13 or more than one radial slot 13, 14. The radial slots 13, 14 may have any suitable shape and size. For example, the radial slots 13, 14 may be rectangular in shape with curved corners. The radial slots 13, 14 may have longitudinal lengths between 13 millimeters and 22 millimeters, and radial lengths between 11 and 14 millimeters. The longitudinal body 9 may include a plurality of radial slots 13, 14 that are axially spaced and circumferentially spaced about the longitudinal body 9. A first set of radial slots may be circumferentially arranged at a first axial location along the longitudinal body 9 and a second set of radial slots may be circumferentially arranged at a second axial location that is spaced from the first axial location. The first set of radial slots may be longer in longitudinal length as compared with the second set of radial slots. The radial lengths of the slots may be the same. Any suitable number of radial slots 13, 14 may be used.

The radial slots 13, 14 are arranged to provide an opening from the outer surface 8 of the temperature probe 2 to outside of the longitudinal body 9 of the scraping sleeve 7. The radial slots 13, 14 may accommodate over 50% of the outer surface of the scraping sleeve 7. Providing at least one radial slot 13 enables the scraped deposits to be removed from the temperature probe 2 through the radial slot 13. Accordingly, providing a plurality of radial slots is advantageous in ensuring the scraped deposits are able to be removed from the temperature probe 2.

As best shown in Fig. 1, the rib 12 defines an inner, radial surface 15 that defines the inner scraping diameter 11 and moves the scraped deposits off the temperature probe 2 in an axial direction along the temperature probe 2. The ribs 10, 12 may each define a radial surface 15, 16, respectively such that the scraping sleeve 2 has at least two surfaces that define the inner scraping diameter 11 of the scraping sleeve 2. The thickness of the radial surfaces 15, 16 and thus the corresponding axial length of the inner scraping diameter 11 is less than the axial length of the radial slots 13, 14. For example, the thickness of the radial surfaces 15, 16 may be between 5.9 and 6.1 millimeters. The radial slots 13, 14 axially extend between the radial surfaces 15, 16 of the ribs 10, 12, respectively, such that the spacing between the axially spaced radial slots 13, 14 may correspond to the thickness of the radial surfaces 15, 16. The longitudinal body 9, the ribs 10, 12, and the radial surfaces 15, 16 may be formed integrally such that the scraping sleeve 2 is formed as a unitary component. The scraping sleeve 2 may be formed of any suitable material such as stainless steel that is able to withstand high temperatures of at least 135 degrees Celsius. Any suitable manufacturing process may be used to form the scraping sleeve 2, including casting, molding, machining, or any combinations thereof.

The temperature probe 2 has a fixed end 17 secured to the base 4 and a free end 18 that is axially opposite relative to the fixed end 17. The scraping sleeve 7 is arranged to surround the free end 18 and may be configured to axially move along a portion of the temperature probe 2. The longitudinal body 9 of the scraping sleeve 7 may be configured to prevent axial movement of the scraping sleeve 7 past a predetermined axial location along the temperature probe 2. The end of the scraping sleeve 7 that is opposite the end of the scraping sleeve 7 that receives the temperature probe 2 is closed such that the temperature probe 2 is only received in a portion of the scraping sleeve 7. The length of the scraping sleeve 7 that receives the temperature probe 2 may be between 44 and 47 millimeters. At least 50% of the entire length of the scraping sleeve 7 receives the temperature probe 2. Between 55 and 65% of the entire length of the scraping sleeve 7 may receive the temperature probe 2.

As best shown in Fig. 3, the scraping sleeve 7 is configured to at least move along a length D of the temperature probe 2 which lies in the flow path of the liquid food product flowing into the housing 3 from the inlet port 5 to the outlet port 6. The length D may be less than 50% of an entire length of the temperature probe 2 from the fixed end 17 to the free end 18 of the temperature probe 2. The height of the temperature probe 2 may only extend to a central location of the flow path of the liquid food product to ensure that the liquid food product flows over a sensing portion of the temperature probe 2.

As best shown in Fig. 4, the inner scraping diameter 11 and the outer surface 8 of the temperature probe 2 define a radial clearance 19 therebetween which enables the scraping sleeve 7 to scrape the deposits from the temperature probe 2 without contacting the outer surface 8 of the temperature probe 2. The inner scraping diameter 11 defined by the radial surfaces 15, 16 may be the same such that the radial clearance between each inner scraping diameter 11 and the temperature probe 2 is the same. Providing the clearance is advantageous in that the scraping sleeve 7 will not scratch or damage the outer surface 8 of the temperature probe 2 which may negatively impact operation of the temperature probe 2 and shorten the life of the temperature probe 2. The clearance 19 may be at least 0.90 millimeters such that when the thickness of the deposits on the outer surface 8 is greater than 0.90 millimeters, the deposits will be scraped from the temperature probe 2. The radial clearance 19 also ensures axial movement of the scraping sleeve 7 along the temperature probe 2. The clearance 19 may be between 0.90 and 1.0 millimeters. The scraping sleeve 7 may be formed to have an inner scraping diameter 11 that is larger than the diameter of the outer surface 8 of the temperature probe 2 by at least 10%.

As shown in Fig. 3, the device 1 further includes an actuator 20 that is connected to the housing 3 and is arranged to drive the scraping sleeve 7 in a direction along a length of the temperature probe 2. The actuator 20 may be a linear actuator. The actuator 20 may be pneumatic, hydraulic, or electric and include a piston, cylinder, and spring as in known actuators. Many different actuation devices may be suitable. The actuator 20 includes a drive shaft 21 that is arranged along the longitudinal axis L and is secured to the scraping sleeve 7 through a top portion of the scraping sleeve 7. As shown in Fig. 4, the scraping sleeve 7 includes a bore 22 in which a complementary fastener 23 of the drive shaft 21 may be received. The bore 22 may extend through at least 50% of the length of an upper portion 24 of the longitudinal body 9 located at an axial end of the scraping sleeve 7 to ensure securement of the fastener 23 within the scraping sleeve 7. The bore 22 may have a longitudinal length between 20 and 24 millimeters and have a diameter that is between 22 and 23 millimeters to receive the fastener 23.

Any suitable securement mechanism or fastener may be used to secure the drive shaft 21 and the scraping sleeve 7. The securement mechanism may protrude from an end of the drive shaft 21, or the longitudinal body 9 may be formed to have a protrusion or securement mechanism that is received in a corresponding bore of the drive shaft 21. The drive shaft 21 and the scraping sleeve 7 may be secured by a threaded connection, a press-fit connection, bolts, rivets, welds, adhesives, combinations thereof, or other securement mechanisms. For example, the drive shaft 21 may be screwed into the scraping sleeve 7.

The actuator 20 may include at least one bearing 25 that is configured to support and align the drive shaft 21 as the drive shaft 21 is moved along the longitudinal axis L. An elastomeric disc 26 may be attached between the scraping sleeve 7 and the bearing 25 or an actuator housing 27 that surrounds the drive shaft 21. The actuator housing 27 is fixed to a top portion of the housing 3 and may include a connector 28 that enables the actuator 20 and the actuator housing 27 to be removable from the housing 3 such as for maintenance or replacement of the components. The actuator 20 may be configured to hold the scraping sleeve 7 in alignment such that the clearance 19 between the scraping sleeve 7 and the temperature probe 2 is maintained. Using the fastener 23 and the actuator housing 27 may be advantageous in preventing radial deflection of the scraping sleeve 7. Thus, surface contact between the scraping sleeve 7 and the temperature probe 2, or scratching of the outer surface 8 of the temperature probe is prevented.

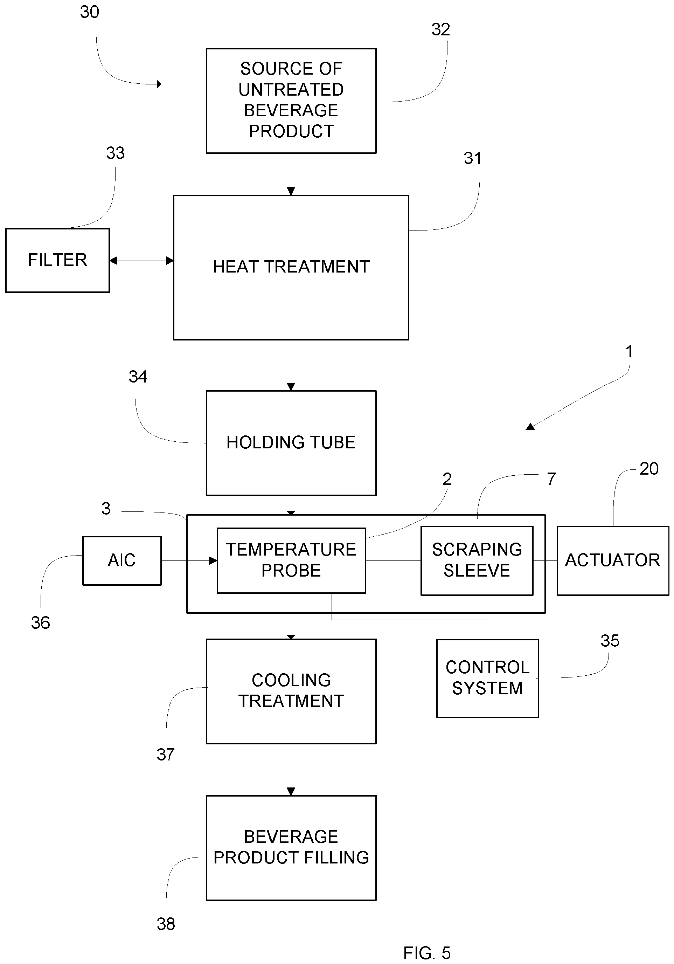

Referring now to Fig. 5, an exemplary liquid food product processing line 30 having a heat treatment system 31 is shown. The processing line 30 includes a source 32 of untreated beverage product which may include raw milk. The untreated beverage product is then moved downstream and heat treated in the heat treatment system 31 such that all pathogenic microorganisms are killed. A minimum temperature and holding time for heat treatment of liquid food products is 72 degrees Celsius and 15 seconds. In exemplary applications, the liquid food product may be heated to a temperature of at least 135 degrees Celsius. Upstream of the heat treatment system 31, the untreated beverage product may undergo clarification through a filter 33 if the raw product contains solid matter such as dirt particles. Other system components such as booster pumps and heat exchangers are also provided to prevent reinfection by the mixture of pasteurized or sterilized product with incompletely heated product.

When the liquid food product leaves the holding tube 34 downstream of the heat treatment system 31, the temperature probe 2 is configured to measure a temperature of the liquid food product. The temperature probe 2 is arranged in the housing 3 that is located downstream of the holding tube 34 and configured to allow passage of the liquid food product through the housing 3. The temperature probe 2 is in electrical communication with a control system 35 such that the temperature probe 2 sends a signal representative of the measured temperature to the control system 35. The control system 35 may include any suitable components such as a processor, a memory, and a controller. Based on the temperature of the liquid food product, the control system 35 may communicate with the actuator 20 to initiate actuation of the scraping sleeve 7 over the temperature probe 2 within the housing 3 to scrape the deposits off of the scraping sleeve 7 when a predetermined temperature is sensed, at predetermined time intervals. The temperature probe 2 will continuously monitor the temperature and send data corresponding to the measured temperature to the control system 35.

The control system 35 may also actuate the AIC system 36 for cleaning the temperature probe 2. The memory in the control system 35 may store a predetermined AIC sequence such that the control system 35 automatically executes the AIC at regular intervals. Using the method is advantageous in that the AIC intervals may be reduced as compared with the intervals for the AIC in conventional housings since the scraping sleeve 7 is used to remove the deposits before the AIC sequence is used. Moreover, the scraping sleeve 7 is advantageous in that physically scraping the deposits provides for an aseptic method of reducing the thickness of the deposit layer on the temperature probe 2.

After the liquid food product is heated to the predetermined temperature and held for the predetermined amount of time, the liquid food product leaves the housing 3 to undergo a cooling treatment 37 arranged downstream of the housing 3. The liquid food product may be cooled rapidly using a regenerative heat exchanger and any other suitable components. The heat exchanger is used to transfer heat from the pasteurized liquid food product to cold incoming food product. The outgoing heat treated milk may be chilled with cold water, ice water, or other suitable refrigerants. The liquid food product may be cooled to temperatures between 4 and 9 degrees Celsius. After the liquid food product is cooled, the cold product or milk is pumped to a filling station 38 of the processing line 30 for filling downstream of the cooling treatment 37.

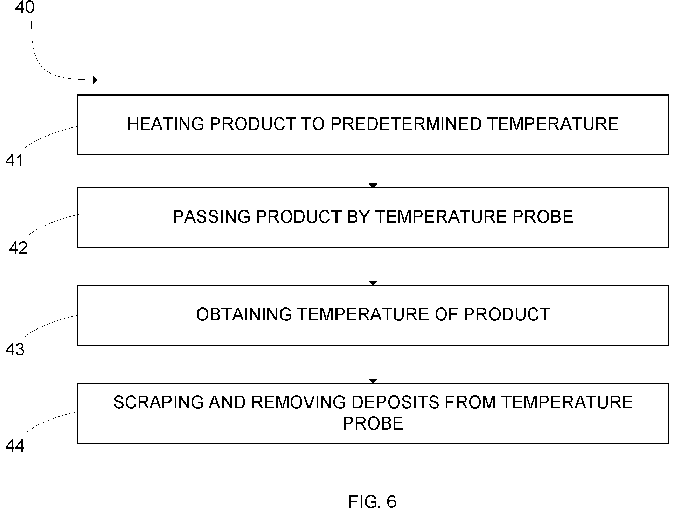

Accordingly, another aspect of the disclosure includes a method 40 of heat treating the liquid food product, as shown in Fig. 6. The method 40 of heat treating the liquid food product includes heating 41 the liquid food product to a predetermined temperature and passing 42 the heated liquid food product through the housing 3 that includes the temperature probe 2 for measuring a temperature of the liquid food product. The method 40 further includes obtaining 43 a signal representative of a temperature of liquid food product passing through the housing 3 to ensure that the predetermined temperature is reached and scraping 44 and removing deposits from the temperature probe 2 that have been formed by accumulation of the liquid food product on the outer surface 8 of the temperature probe 2.

While the invention has been described with reference to one or more embodiments, which embodiments have been set forth in considerable detail for the purposes of making a complete disclosure of the invention, such embodiments are merely exemplary and are not intended to be limiting or represent an exhaustive enumeration of all aspects of the invention. The scope of the invention, therefore, shall be defined solely by the following claims.

## Claims

1. A device for measuring a temperature of a liquid food product, the device comprising
a housing (3) having an inlet (5) and an outlet (6) for allowing passage of liquid food product through the housing (3),
a temperature probe (2) located within the housing (3) for providing a signal representative of a temperature of liquid food product passing through the housing (3),
a scraping sleeve (7) that is concentrically arranged over the temperature probe (2) and axially moveable along the temperature probe (2) to scrape and remove deposits from the temperature probe (2) that have been formed by accumulation of liquid food product on an outer surface (8) of the temperature probe (2),
an actuator (20) to which an axial end (24) of the scraping sleeve (7) is attached, such that the actuator (20) can move the scraping sleeve (7) along the temperature probe (2),
wherein
the scraping sleeve (7) has a longitudinal body (9) and at least one radial slot (13) formed in the longitudinal body (9) to allow deposits that have been scraped from the temperature probe (2) to be removed from the temperature probe (2) through the at least one radial slot (13).

2. The device (1) according to claim 1, wherein an inner diameter (7) of the scraping sleeve (7) and the outer surface (8) of the temperature probe (2) define a radial clearance (19) therebetween to allow the scraping sleeve (7) to scrape the deposits from the temperature probe (2) without contacting the outer surface (8) of the temperature probe (2).

3. The device (1) according to claim 2, wherein the radial clearance (19) is at least 0.90 millimeters.

4. The device (1) according to any preceding claim, wherein the scraping sleeve (7) has an inner scraping diameter (11) that is larger than the outer diameter (8) of the temperature probe (2) by at least 10%.

5. The device (1) according to any preceding claim, wherein the scraping sleeve (7) surrounds an entire diameter of the outer surface (6) of the temperature probe (2).

6. The device (1) according to any preceding claim, wherein the longitudinal body (9) of the scraping sleeve (7) has at least one rib (10) that defines an inner scraping diameter (11) of the scraping sleeve (7)

7. The device (1) according to claim 6, wherein the at least one rib (10) defines a radial surface (15) for moving the deposits that has been scraped off from the temperature probe (2) in an axial direction along the temperature probe (2).

8. The device (1) according to claim 6 or 7, wherein the scraping sleeve (7) has a plurality of radial slots (13, 14) and a plurality of ribs (10, 12) that define inner, radial surfaces (15, 16) of the scraping sleeve (7).

9. The device (1) according to claim 8, wherein the plurality of radial slots form over 50% of an outer periphery of the scraping sleeve (5).

10. The device (1) according to any preceding claim, wherein the scraping sleeve (7) is arranged at a free axial end (18) of the temperature probe (2).

11. A heat-treatment system (31) arranged to increase a temperature of a liquid food product to thereby reduce the number of microorganisms in the liquid food product, the system (31) comprising an arrangement of the device (1) according to any proceeding claim for measuring the temperature of the liquid food product.

12. A method (40) of heat treating a liquid food product, the method comprising:
heating (41) the liquid food product to a predetermined temperature of at least 135 °C,
passing (42) the heated liquid food product through a device (1) according to any one of the claims 1-11 that comprises a temperature probe (2) for measuring a temperature of the liquid food product,
obtaining (43) a signal representative of a temperature of liquid food product passing through said device (1), to ensure that the predetermined temperature is reached, and
scraping (44) and removing deposits from the temperature probe (2) that have been formed by accumulation of the liquid food product fluid on an outer surface (8) of the temperature probe (2) by a scraping sleeve (7) of the device (1) that is concentrically arranged over the temperature probe (2) and axially moveable along the temperature probe (2) wherein an actuator (20) to which an axial end (24) of the scraping sleeve (7) is attached, such that the actuator (20) can move the scraping sleeve (7) along the temperature probe (2),
wherein the scraping sleeve (7) has a longitudinal body (9) and at least one radial slot (13) formed in the longitudinal body (9) to allow deposits that have been scraped from the temperature probe (2) to be removed from the temperature probe (2) through the at least one radial slot (13).

## Patentansprüche

1. Vorrichtung zum Messen der Temperatur eines flüssigen Lebensmittelprodukts, wobei die Vorrichtung umfasst:
ein Gehäuse (3) mit einem Einlass (5) und einem Auslass (6), um den Durchfluss von flüssigen Lebensmittelprodukten durch das Gehäuse (3) zu ermöglichen,
einen Temperaturfühler (2), der sich im Gehäuse (3) befindet, um ein Signal bereitzustellen, das für die Temperatur des flüssigen Lebensmittelprodukts, das durch das Gehäuse (3) fließt, repräsentativ ist,
eine Schabehülse (7), die konzentrisch über der Temperatursonde (2) angeordnet und axial entlang des Temperaturfühlers (2) beweglich ist, um Ablagerungen vom Temperaturfühler (2) abzuschaben und zu entfernen,
die sich durch Ansammlung von flüssigem Lebensmittelprodukt auf einer Außenfläche (8) des Temperaturfühlers (2) gebildet haben,
ein Stellglied (20), an dem ein axiales Ende (24) der Schabehülse (7) befestigt ist, so dass das Stellglied (20) die Schabehülse (7) entlang des Temperaturfühlers (2) bewegen kann,
wobei
die Schabehülse (7) einen Längskörper (9) und wenigstens einen radialen Schlitz (13) aufweist, der in dem Längskörper (9) ausgebildet ist, um zu ermöglichen, dass Ablagerungen, die vom Temperaturfühler (2) abgeschabt wurden, durch den wenigstens einen radialen Schlitz (13) vom Temperaturfühler (2) entfernt werden können.

2. Vorrichtung (1) gemäß Anspruch 1, wobei ein Innendurchmesser (7) der Schabehülse (7) und die Außenfläche (8) des Temperaturfühlers (2) einen radialen Freiraum (19) dazwischen definieren, um zu ermöglichen, dass die Schabehülse (7) die Ablagerungen vom Temperaturfühler (2) abschabt, ohne die Außenfläche (8) des Temperaturfühlers (2) zu berühren.

3. Vorrichtung (1) gemäß Anspruch 2, wobei der radiale Freiraum (19) wenigstens 0,9 Millimeter beträgt.

4. Vorrichtung (1) gemäß einem der vorstehenden Ansprüche, wobei die Schabehülse (7) einen inneren Schabedurchmesser (11) aufweist, der um wenigstens 10% größer ist als der Außendurchmesser (8) des Temperaturfühlers (2).

5. Vorrichtung (1) gemäß einem der vorstehenden Ansprüche, wobei die Schabehülse (7) einen Gesamtdurchmesser der Außenfläche (6) des Temperaturfühlers (2) umgibt.

6. Vorrichtung (1) gemäß einem der vorstehenden Ansprüche, wobei der Längskörper (9) der Schabehülse (7) wenigstens eine Rippe (10) aufweist, die einen inneren Schabedurchmesser (11) der Schabehülse (7) definiert.

7. Vorrichtung (1) gemäß Anspruch 6, wobei die wenigstens eine Rippe (10) eine radiale Oberfläche (15) definiert, um die Ablagerungen, die vom Temperaturfühler (2) abgeschabt wurden, in einer axialen Richtung entlang des Temperaturfühlers (2) zu bewegen.

8. Vorrichtung (1) gemäß Anspruch 6 oder 7, wobei die Schabehülse (7) mehrere radiale Schlitze (13, 14) und mehrere Rippen (10, 12) aufweist, die innere, radiale Oberflächen (15, 16) der Schabehülse (7) definieren.

9. Vorrichtung (1) gemäß Anspruch 8, wobei die mehreren radialen Schlitze über 50% eines Außenumfangs der Schabehülse (5) ausmachen.

10. Vorrichtung (1) gemäß einem der vorstehenden Ansprüche, wobei die Schabehülse (7) an einem freien axialen Ende (18) des Temperaturfühlers (2) angeordnet ist.

11. Wärmebehandlungssystem (31), das dafür ausgelegt ist, die Temperatur eines flüssigen Lebensmittelprodukts zu erhöhen, um dadurch die Anzahl von Mikroorganismen in dem flüssigen Lebensmittelprodukt zu verringern, wobei das System (31) eine Anordnung der Vorrichtung (1) gemäß einem der vorstehenden Ansprüche zum Messen der Temperatur des flüssigen Lebensmittelprodukts umfasst.

12. Verfahren (40) zur Wärmebehandlung eines flüssigen Lebensmittelprodukts, wobei das Verfahren umfasst:
Erhitzen (41) des flüssigen Lebensmittelprodukts auf eine vorbestimmte Temperatur von wenigstens 135 °C,
Durchleiten (42) des erhitzten flüssigen Lebensmittelprodukts durch eine Vorrichtung (1) gemäß einem der Ansprüche 1-11, die einen Temperaturfühler (2) zum Messen einer Temperatur des flüssigen Lebensmittelprodukts umfasst,
Erhalten (43) eines Signals, das für die Temperatur des flüssigen Lebensmittelprodukts, das die Vorrichtung (1) durchläuft, repräsentativ ist, um sicherzustellen, dass die vorbestimmte Temperatur erreicht wird, und
Abschaben (44) und Entfernen von Ablagerungen vom Temperaturfühler (2), die sich durch Ansammlung von Fluid des flüssigen Lebensmittelprodukts auf einer Außenfläche (8) des Temperaturfühlers (2) gebildet haben, durch eine Schabehülse (7) der Vorrichtung (1), die konzentrisch über dem Temperaturfühler (2) angeordnet und axial entlang des Temperaturfühlers (2) bewegbar ist, wobei ein Stellglied (20), an dem ein axiales Ende (24) der Schabehülse (7) befestigt ist, so dass das Stellglied (20) die Schabehülse (7) entlang des Temperaturfühlers (2) bewegen kann,
wobei die Schabehülse (7) einen Längskörper (9) und wenigstens einen radialen Schlitz (13) aufweist, der in dem Längskörper (9) ausgebildet ist, um zu ermöglichen, dass Ablagerungen, die vom Temperaturfühler (2) abgeschabt wurden, durch den wenigstens einen radialen Schlitz (13) vom Temperaturfühler (2) entfernt werden können.

## Revendications

1. Dispositif de mesure d'une température d'un produit alimentaire liquide, le dispositif comprenant :
un boîtier (3) ayant une entrée (5) et une sortie (6) pour permettre le passage d'un produit alimentaire liquide à travers le boîtier (3),
une sonde de température (2) située à l'intérieur du boîtier (3) pour fournir un signal représentatif d'une température de produit alimentaire liquide passant à travers le boîtier (3),
un manchon de raclage (7) qui est agencé de manière concentrique sur la sonde de température (2) et mobile axialement le long de la sonde de température (2) pour racler et éliminer les dépôts de la sonde de température (2) formés par l'accumulation de produit alimentaire liquide sur une surface extérieure (8) de la sonde de température (2),
un actionneur (20) auquel une extrémité axiale (24) du manchon de raclage (7) est fixée, de sorte que l'actionneur (20) puisse déplacer le manchon de raclage (7) le long de la sonde de température (2), le manchon de raclage (7) ayant un corps longitudinal (9) et au moins une fente radiale (13) formée dans le corps longitudinal (9) pour permettre aux dépôts qui ont été raclés de la sonde de température (2) d'être éliminés de la sonde de température (2) à travers l'au moins une fente radiale (13).

2. Dispositif (1) selon la revendication 1, un diamètre intérieur (7) du manchon de raclage (7) et la surface extérieure (8) de la sonde de température (2) définissant un jeu radial (19) entre eux pour permettre au manchon de raclage (7) de racler les dépôts de la sonde de température (2) sans entrer en contact avec la surface extérieure (8) de la sonde de température (2).

3. Dispositif (1) selon la revendication 2, le jeu radial (19) étant d'au moins 0,90 millimètre.

4. Dispositif (1) selon n'importe quelle revendication précédente, le manchon de raclage (7) ayant un diamètre intérieur de raclage (11) supérieur au diamètre extérieur (8) de la sonde de température (2) d'au moins 10 %.

5. Dispositif (1) selon n'importe quelle revendication précédente, le manchon de raclage (7) entourant un diamètre entier de la surface extérieure (6) de la sonde de température (2).

6. Dispositif (1) selon n'importe quelle revendication précédente, le corps longitudinal (9) du manchon de raclage (7) ayant au moins une nervure (10) qui définit un diamètre intérieur de raclage (11) du manchon de raclage (7)

7. Dispositif (1) selon la revendication 6, l'au moins une nervure (10) définissant une surface radiale (15) pour déplacer les dépôts qui ont été raclés de la sonde de température (2) dans une direction axiale le long de la sonde de température (2).

8. Dispositif (1) selon la revendication 6 ou 7, le manchon de raclage (7) ayant une pluralité de fentes radiales (13, 14) et une pluralité de nervures (10, 12) qui définissent des surfaces radiales intérieures (15, 16) du manchon de raclage (7).

9. Dispositif (1) selon la revendication 8, la pluralité de fentes radiales formant plus de 50 % de la périphérie extérieure du manchon de raclage (5).

10. Dispositif (1) selon n'importe quelle revendication précédente, le manchon de raclage (7) étant agencé à une extrémité axiale libre (18) de la sonde de température (2).

11. Système de traitement thermique (31) agencé pour augmenter la température d'un produit alimentaire liquide afin de réduire le nombre de micro-organismes dans le produit alimentaire liquide, le système (31) comprenant un agencement du dispositif (1) selon n'importe quelle revendication précédente pour mesurer la température du produit alimentaire liquide.

12. Procédé (40) de traitement thermique d'un produit alimentaire liquide, le procédé comprenant :
le chauffage (41) du produit alimentaire liquide à une température prédéterminée d'au moins 135 °C,
le passage (42) du produit alimentaire liquide chauffé à travers un dispositif (1) selon l'une quelconque des revendications 1 à 11, qui comprend une sonde de température (2) pour mesurer une température du produit alimentaire liquide,
l'obtention (43) d'un signal représentatif de la température du produit alimentaire liquide passant à travers ledit dispositif (1), afin de s'assurer que la température prédéterminée est atteinte, et
le raclage (44) et l'élimination des dépôts de la sonde de température (2) qui ont été formés par l'accumulation du produit alimentaire liquide sur une surface extérieure (8) de la sonde de température (2) par un manchon de raclage (7) du dispositif (1) qui est agencé de manière concentrique sur la sonde de température (2) et déplaçable axialement le long de la sonde de température (2), un actionneur (20) auquel une extrémité axiale (24) du manchon de raclage (7) est fixée, de sorte que l'actionneur (20) peut déplacer le manchon de raclage (7) le long de la sonde de température (2),
le manchon de raclage (7) ayant un corps longitudinal (9) et au moins une fente radiale (13) formée dans le corps longitudinal (9) pour permettre aux dépôts qui ont été raclés de la sonde de température (2) d'être éliminés de la sonde de température (2) à travers l'au moins une fente radiale (13).
